# FASCICULE DE BREVET EUROPEEN

(11) **EP 2 209 579 B1**
(45) Date de publication et mention de la délivrance du brevet: **12.12.2012**
(21) Numéro de dépôt: 08870153.7
(22) Date de dépôt: 15.10.2008
(51) Int. Cl.: B23K 9/04, B23K 15/00, B23K 26/34

(54) **PROCÉDÉ DE RECHARGEMENT PAR SOUDAGE D'UNE PIÈCE, AVEC INCORPORATION DE PARTICULES CÉRAMIQUES DANS LA SOUDURE**
AUFTRAGSSCHWEISSVERFAHREN EINES WERKSTÜCKES, IN DEM KERAMISCHEN PARTIKEL IN DER SCHWEISSUNG EINGEBAUT WERDEN.
BUILD-UP WELDING METHOD OF A WORKPIECE, IN WHICH CERAMIC PARTICLES ARE INCORPORATED WITH THE WELD.

(30) Priorité: 26.10.2007 FR 0707559
(43) Date de publication de la demande: 28.07.2010
(73) Titulaire: Etudes Et Diffusions Metallurgiques Igle E.d.m., 38190 Crolles (FR); Steeltech Services Sprl, 4850 Plombières (BE)
(72) Inventeur: WENDERS, Georges, B-4850 Plombières (BE)
(74) Mandataire: Dubreu, Sandrine
(86) Numéro de dépôt international: PCT/FR2008/001448
(87) Numéro de publication internationale: WO 2009/087303

(56) Documents cités:
- EP-A- 0 454 072
- US-A- 4 992 337
- US-A1- 2003 201 251

## Description

### Domaine technique de l'invention

L'invention concerne un procédé de rechargement tel que revendiqué dans le préambule de la revendication 1. en particulier un procédé de rechargement dur par soudage, comportant le revêtement d'au moins une partie d'une surface de ladite pièce, par au moins une couche constituée par un matériau composite comprenant :
- un alliage métallique obtenu par fusion d'une extrémité d'un élément d'apport comportant ledit alliage métallique
- et des particules céramiques.

Un tel procédé est décrit dans DE 10 2007 019 510 B3.

### État de la technique

Il est connu de protéger des pièces mécaniques, dont la durée de vie est raccourcie par les fortes sollicitations qu'elles subissent en service, par un procédé dit de rechargement par soudage.

Un tel procédé consiste en général à déposer, sur une partie d'une pièce, un matériau métallique en fusion, pour former, après solidification dudit matériau, une couche solide recouvrant ladite partie de la pièce.

Le matériau métallique d'apport, par exemple un métal ou un alliage, a en général des propriétés mécaniques supérieures à celles du matériau constituant ladite pièce. Pour un rechargement dur, le matériau présente, par exemple, une dureté supérieure à celle du matériau constituant ladite pièce et/ou une résistance aux chocs, à l'abrasion et à l'érosion supérieure à celle de la pièce à recouvrir.

De plus, les moyens et les procédés utilisés pour déposer le matériau métallique d'apport sont, en général, les moyens et les procédés utilisés dans le domaine du soudage. Ainsi, le procédé de rechargement par soudage peut utiliser, comme produit pour rechargement, un fil plein ou un fil fourré, c'est-à-dire un fil constitué d'une électrode tubulaire continue remplie d'une poudre métallique. Un tel fil est alors disposé au-dessus de la pièce à recouvrir et son extrémité libre est fondue par l'énergie des appareils de soudage classiques, afin que le matériau constituant le fil plein ou contenu dans le fil fourré fonde et tombe sur la pièce à revêtir, avant de se solidifier. Dans la demande de brevet US-A-2003/0201251, un revêtement composite est déposé à la surface d'un corps tel qu'un disque de frein, par projection à l'aide d'un fluide d'un mélange constitué d'un composé métallique en fusion et de particules telles que des particules céramiques. Les particules sont apportées par le fluide dans la zone de fusion, afin d'être mélangées audit composé métallique en fusion avant que le mélange ne soit déposé par projection sur la surface du corps. Le composé métallique en fusion est obtenu par fusion d'une extrémité d'un fil contenant ledit composé métallique, à l'aide d'un arc électrique et il est simplement déposé à la surface du corps, sans y pénétrer.

Le rechargement par soudage peut être utilisé pour réparer des pièces mécaniques usées. En choisissant judicieusement la nuance du matériau d'apport, il permet d'améliorer le comportement en service de la partie de la pièce réparée. De plus, la notion de rechargement par soudage peut être intégrée dès la conception de la pièce mécanique, en déterminant les zones de la pièce où le matériau doit avoir des propriétés particulières (par exemple en réalisant un rechargement dur ou inoxydable) et les zones de la pièce où des matériaux de moindre coût peuvent être utilisés.

Le procédé de rechargement dur permet, notamment, de réaliser des tôles rechargées, par exemple utilisables en tant que telles dans des applications anti-usure ou utilisées en tant que produit semi-fini. Il permet, notamment, d'améliorer la durée de vie des tôles par rapport aux tôles fabriquées avec d'autres solutions anti-usure connues, telles que les tôles fabriquées avec des aciers de type S235JR selon la norme EN 10025. La durée de vie d'une tôle rechargée est, en particulier, dix fois supérieure à celle d'une tôle réalisée avec un acier de type S235JR.

Cependant, malgré une nette amélioration de la durée de vie des tôles, celle-ci n'est pas encore suffisante. En effet, on cherche toujours à augmenter l'intervalle de temps entre deux opérations de maintenance relatives à l'usure d'une pièce mécanique. Les fabricants de tôles rechargées doivent donc diminuer encore la fréquence des opérations de maintenance et donc encore augmenter la durée de vie des tôles, afin d'augmenter celle de la pièce mécanique destinée à recevoir une telle tôle rechargée.

La demande de brevet WO-A-98/15373 propose une autre solution que le procédé de rechargement par soudage pour réaliser une pièce d'usure utilisée dans des installations de broyage, de concassage et de transport de matières abrasives diverses en matériau composite. La pièce d'usure est constituée d'une matrice métallique dont la face d'usure comporte des inserts ayant de bonnes propriétés de résistance à l'usure. Les inserts sont en un matériau céramique constitué d'une solution solide d'alumine et de zircone. Ladite pièce est réalisée en disposant des galettes en céramique dans un moule approprié, dans lequel une fonte liquide est coulée. Les galettes en céramique sont préalablement réalisées, en versant des particules céramiques dans un autre moule de forme appropriée, avec une colle liquide qui, après durcissement, retient les particules ensemble pour former les galettes. Une telle solution permet d'obtenir des pièces d'usure ayant une durée de vie améliorée. Cependant, elle s'avère difficile à mettre en oeuvre car elle nécessite la réalisation de plusieurs moules de formes appropriées. De plus, il peut se poser des problèmes d'infiltration de la fonte liquide au sein des galettes en céramique.

### Objet de l'invention

L'invention a pour but un procédé permettant de réaliser une pièce, telle qu'une tôle, présentant une résistance à l'usure, et en particulier une résistance aux chocs, à l'abrasion et/ou à l'érosion, améliorées, tout en étant facile à mettre en oeuvre.

Selon l'invention, ce but est atteint par les revendications annexées.

En particulier, selon l'invention, ce but est atteint par un procédé de rechargement suivant la revendication 1.

Selon un développement de l'invention, les particules céramiques sont choisies parmi l'alumine, la zircone, la silice et un mélange d'alumine et de zircone.

Selon un mode de réalisation préférentiel, le matériau composite comporte des particules d'au moins un alliage métallique supplémentaire, lesdites particules étant mélangées aux particules céramiques avant que le mélange desdites particules ne soit déposé à l'aide de l'élément de distribution, sur la partie de la surface de la pièce.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, schématiquement et en coupe, un mode particulier de réalisation d'un procédé de rechargement selon l'invention.
- la figure 2 représente un graphique comparant la résistance à l'usure de trois tôles A à C.
- les figures 3 et 4 représentent respectivement en vue de dessus et en vue de côté un premier mode de réalisation d'une tôle rechargée selon l'invention.
- les figures 5 et 6 représentent respectivement en vue de dessus et en vue de côté un second mode de réalisation d'une tôle rechargée selon l'invention.
- les figures 7 à 10 représentent des pièces de différentes géométries rechargées selon l'invention.

### Description de modes particuliers de réalisation

L'amélioration de la durée de vie d'une pièce, telle qu'une tôle, est réalisée par un procédé de rechargement par soudage, et plus particulièrement par un procédé de rechargement dur.

Le revêtement déposé sur une partie d'une surface de ladite pièce selon l'invention comporte non seulement au moins un alliage métallique obtenu par soudage d'un élément d'apport, tel qu'un fil ou un feuillard, plein ou fourré, mais aussi des particules céramiques très résistantes à l'usure.

Or, les particules céramiques sont déposées, pendant la fusion de l'extrémité de l'élément d'apport, sur la surface de la pièce par un élément de distribution disposé à proximité de l'extrémité de l'élément d'apport, de sorte que les particules céramiques forment, avec l'alliage métallique solidifié, un matériau composite très résistant à l'usure.

L'alliage métallique, également appelé alliage de rechargement, est, avantageusement, choisi parmi les alliages à base de fer et les alliages non ferreux. Il est, plus particulièrement, un alliage de soudage, tel que les alliages selon la norme DIN8555 du groupe 1-10, 20-23 et 30-32, comme indiqué dans le tableau ci-dessous :

| **Groupe d'alliage** | **Descriptif des groupes d'alliages** |
|---|---|
| **01** | non allié jusqu' à 0,4%C ou faiblement allié jusqu' à 0,4%C et jusque 5% max. d'éléments d'alliage Cr, Mn, Mo, Ni au total |
| **02** | non allié avec plus que 0,4%C ou faiblement allié avec plus que 0,4%C et jusque 5% max. d'éléments d'alliage Cr, Mn, Mo, Ni au total. |
| **03** | allié, avec les propriétés des aciers pour le travail à chaud. |
| **04** | allié, avec les propriétés des aciers rapides |
| **05** | allié avec plus que 5%Cr et une faible teneur en C (Jusqu'à env. 0,2%C) |
| **06** | allié avec plus que 5%Cr et une haute teneur en C (d'env 0,2% jusqu'à 2%C) |
| **07** | Mn-austénite avec de 11 à 18% Mn. plus que 0.5%C et jusqu'à 3%Ni |
| **08** | Cr-Ni-Mn austénite |
| **09** | aciers Cr-Ni (résistant à la rouille, aux acides et aux températures élevées) |
| **10** | haute teneur en C (d'env. 2,0% jusqu'à 7%C) et hautement allié en Cr (d'env. 10 jusqu'à 40%Cr), avec et sans formation de carbures additionnels |
| **20** | base Co, allié Cr-W, avec sans Ni ou Mo |
| **21** | base carbure (fritté, coulé ou remplissage) |
| **22** | base Ni, allié Cr, allié Cr-B |
| **23** | base Ni, allié Mo avec soit sans Cr |
| **30** | base Cu, allié SM |
| **31** | base Cu, allié Al |
| **32** | base Cu, allié Ni |

Il est contenu dans un élément d'apport, tel qu'un fil ou un feuillard, plein ou fourré. Les fils fourrés peuvent, par ailleurs, être tubulaires ou jointifs. De plus, l'élément d'apport peut contenir un ou plusieurs alliages métalliques, avec éventuellement un ou plusieurs autres éléments d'addition. Ainsi, dans le cas d'un fil ou d'un feuillard plein, l'élément d'apport peut être constitué par le ou les alliages métalliques, avec un ou plusieurs autres éléments d'addition, tandis que dans le cas d'un fil ou d'un feuillard fourré, l'élément d'apport comporte une enveloppe renfermant le ou les alliages métalliques, avec un ou plusieurs autres éléments d'addition. L'enveloppe peut alors être réalisée en un composé différent ou non du composant qu'elle renferme.

Tout type de moyens et de procédés de soudage classiquement connus peut être employé selon l'invention pour déposer l'alliage métallique par soudage dès lors que celui-ci comprend la mise en contact de l'extrémité de l'élément d'apport avec la surface de la pièce avant la fusion de l'extrémité de l'élément d'apport. Ainsi, la mise en contact de l'extrémité de l'élément d'apport avec la surface de la pièce assure que la fusion de l'extrémité de l'élément d'apport est accompagnée d'une fusion superficielle du matériau constituant la pièce à revêtir en formant à la surface de la pièce à revêtir, un bain de fusion dans lequel sont déposées des particules céramiques Ceci assure aussi une bonne pénétration de l'alliage métallique et des particules céramiques dans la pièce et donc une résistance à l'usure, et en particulier une résistance aux chocs, à l'abrasion et/ou à l'érosion, améliorées.

À titre d'exemple, les procédés se référant à la norme NF EN ISO 4063 et les éléments d'apport de soudage se référant à la norme DIN 8555 mentionnés ci-dessous peuvent être utilisés :
- le soudage manuel à l'arc avec une électrode enrobée,
- le soudage sous flux, avec un fil ou un feuillard simple ou des multi-fils ou des multi-feuillards,
- le soudage MIG, MAG ou TIG, avec un fil simple ou des multi-fils, sous gaz de protection conformément à la norme EN 439,
- le soudage MAG, avec un fil fourré simple ou multi-fils, sous gaz de protection conformément à la norme EN 439,
- le soudage par faisceau d'électrons,
- le soudage laser et
- le soudage sous laitier, avec un fil ou un feuillard, simple ou multi.

Les particules céramiques sont, avantageusement, choisies parmi l'alumine, la zircone, la silice et un mélange d'alumine et de zircone. Elles sont, de plus, poreuses et agglomérées, par exemple par un ou plusieurs liants, tels que des liants organiques. Lorsque les particules céramiques sont un mélange d'alumine et de zircone, elles sont, avantageusement, fabriquées par électro-fusion, par frittage, par projection thermique ou par tout autre procédé permettant d'obtenir une phase homogène (solution solide).

Les particules céramiques peuvent également être mélangées à au moins un alliage métallique supplémentaire, avant que le mélange des particules ne soit déposé à l'aide de l'élément de distribution sur la partie de la surface de la pièce. L'alliage métallique supplémentaire est, par exemple, un alliage à base de fer (ferro-alliage) ou un alliage non ferreux. L'alliage métallique supplémentaire est, par exemple, du ferro-chrome.

La pièce à revêtir est avantageusement une tôle en acier, ayant une épaisseur comprise entre 2mm et 500mm. L'acier formant la tôle peut être de tout type, selon le domaine d'application dans lequel la tôle est employée. À titre d'exemple, il peut être un acier utilisé dans le domaine de la construction, de la cémentation, de la nitruration, du décolletage, des roulements à billes, des ressorts, des trempes superficielles ou de l'extrusion à froid. Il peut également être tenace à froid, résistant à la pression, à la chaleur, aux intempéries ou aux hautes températures. Il peut aussi être un acier amagnétique, réfractaire, inoxydable ou à base Nickel.

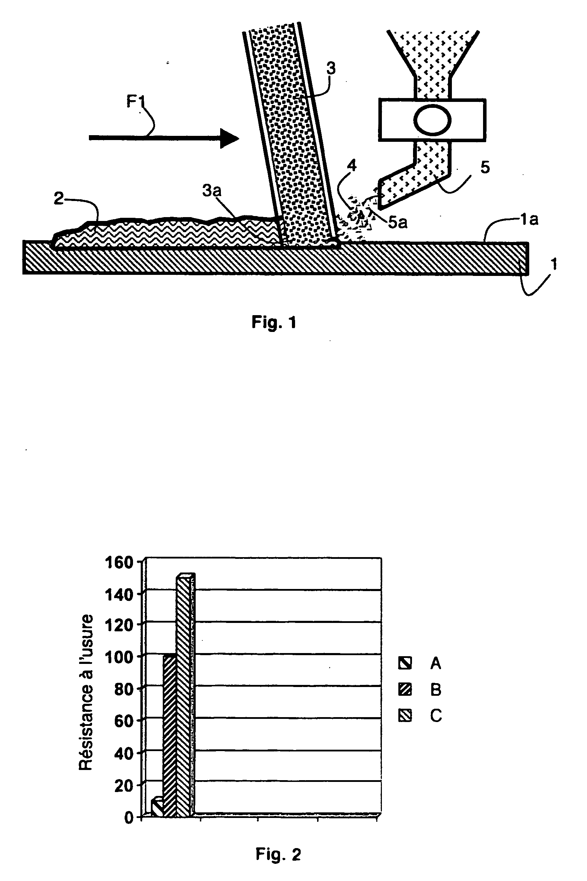

La figure 1 illustre un mode particulier de réalisation d'un procédé selon l'invention.

Une partie de la surface 1a d'une tôle 1 est recouverte d'au moins une couche 2 comportant au moins :
- un alliage métallique dur, c'est-à-dire un alliage métallique présentant une dureté supérieure à la dureté de la tôle à recouvrir et/ou une résistance aux chocs, à l'abrasion, à l'érosion supérieure à celle de la tôle à recouvrir
- et des particules céramiques agglomérées.

L'alliage métallique dur est déposé par une opération de soudage, c'est-à-dire par fusion d'une extrémité 3a d'un élément d'apport 3 comportant au moins ledit alliage et préalablement mise en contact avec la surface 1a de la tôle 1 à revêtir.

À titre d'exemple, le soudage peut être un soudage de type MIG semi-automatique ou automatique. Dans ce cas, un arc électrique est établi entre l'extrémité de l'élément d'apport 3, formé par exemple par une électrode consommable, un fil plein, un fil fourré ou un feuillard, et le matériau constituant la tôle 1, par exemple de l'acier. L'élément d'apport 3 peut être amené automatiquement en continu en contact avec le bain de fusion, qui correspond à un mélange comprenant le matériau constituant la tôle 1 en fusion et l'alliage métallique de l'élément d'apport 3 en fusion. La vitesse de défilement de l'élément d'apport 3 est fonction de l'intensité de l'arc créé entre la tôle 1 et l'élément d'apport 3. De plus, contrairement à la plupart des autres techniques de soudage, la torche de soudage associée à l'élément d'apport dans un procédé de type MIG, est connectée au pole positif du générateur de courant afin de permettre une meilleure fusion. Ceci assure également une bonne pénétration de l'alliage métallique dans la pièce. Le câble de masse est branché entre la borne négative du générateur de tension et la tôle à revêtir. De plus, le générateur de courant (de 150 à 600 A) nécessairement à courant continu permet de stabiliser la longueur d'arc. Il est de plus à tension constante ("à courbe plate"), ce qui permet le soudage en arc court ou en arc long. Ainsi quelle que soit la longueur d'arc, l'intensité ne variera que faiblement et l'apport de chaleur restera stable, au profit de la qualité du rechargement. Dans un tel procédé de type MIG, le dépôt de l'alliage métallique est accompagné d'un gaz protecteur, dont le choix est en général déterminé par la nature du matériau constituant la pièce à recharger. Le gaz protecteur peut par exemple être contenu dans l'élément d'apport (fil fourré par exemple) ou bien il peut être amené séparément. Un tel gaz protecteur permet d'obtenir le dépôt d'une couche peu ou pas poreuse.

Par ailleurs, pendant l'opération de fusion de l'extrémité 3a de l'élément d'apport 3, des particules céramiques agglomérées 4 sont déposées sur la partie de la surface 1a de la tôle 1, à l'aide d'un élément de distribution 5. L'élément de distribution comporte une sortie 5a déposée à proximité de l'élément d'apport 3, lorsque l'extrémité de l'élément d'apport 3 est en contact avec la partie de la surface de la tôle 1. En particulier, la distance séparant la sortie 5a de l'élément de distribution 5 et l'extrémité 3a de l'élément d'apport 3 est comprise, avantageusement, entre 5mm et 50mm, de telle manière que les particules céramiques agglomérées 4 soient déposées sous un angle de 15° à 60° par rapport à l'axe longitudinal de l'élément d'apport 3.

De plus, l'élément d'apport 3 et l'élément de distribution 5 sont chacun, avantageusement, en mouvement par rapport à la tôle 1.

Ainsi, dans un premier cas, la tôle 1 peut être animée d'un mouvement suivant une direction de dépôt prédéterminée tandis que l'élément d'apport 3 et l'élément de distribution 5 sont fixes.

Dans un second cas, la tôle 1 peut être fixe et l'élément d'apport 3 et l'élément de distribution 5 peuvent être chacun animés d'un mouvement. Le mouvement animant l'élément d'apport 3 suit également une direction de dépôt prédéterminée. L'élément de distribution 5 peut, quant à lui, être couplé à l'élément de d'apport 3 afin de suivre son mouvement ou bien son mouvement peut être indépendant de celui de l'élément d'apport 3. Ainsi, l'élément de distribution 5 peut être animé d'un mouvement de rotation autour de l'axe longitudinal de l'élément d'apport 3, sur 360°. Dans ce cas, les particules céramiques 4 sont déposées sur la surface 1 a, tout autour et à proximité de l'extrémité 3a de l'élément d'apport 3.

Dans les deux cas, la direction de dépôt (flèche F1 sur la figure 1) est, en particulier, déterminée en fonction de la géométrie de la partie de la surface 1a de la tôle 1 à revêtir.

De plus, dans les deux cas, les particules céramiques agglomérées peuvent être déposées en amont de l'élément d'apport 3, suivant ladite direction de dépôt (F1). Ainsi, chaque point de la partie de la surface de la tôle à revêtir reçoit tout d'abord des particules céramiques, qui sont, ensuite, recouvertes par l'alliage métallique fondu. En effet, l'opération de dépôt de particules céramiques peut se pratiquer simultanément à l'opération de fusion de l'extrémité de l'élément d'apport, mais avec un décalage temporel en chaque point de la partie de la surface à revêtir, compte tenu du décalage spatial existant entre les éléments d'apport 3 et de distribution 5 et du mouvement relatif entre la tôle 1 et les deux éléments 3 et 5.

Dans une variante et en fonction de la densité des particules céramiques agglomérées, les particules céramiques agglomérées peuvent également tomber directement dans l'alliage métallique fondu, avant que celui-ci ne se solidifie.

De plus, la vitesse de soudage et l'épaisseur des dépôts réalisés sont, avantageusement, contrôlées. Ainsi, des dépôts rapides de faibles épaisseurs permettent d'obtenir une structure très fine et des dépôts de très grande dureté. De plus, la vitesse de refroidissement peut également être contrôlée, et avantageusement diminuée, notamment dans le cas de dépôts épais, afin de contrôler la micro-dureté et diminuer les risques de fissuration.

Un procédé selon l'invention permet, alors, d'obtenir une tôle 1 rechargée sur une partie ou sur la totalité de sa surface 1a, avec un renfort en matériau composite homogène. Le renfort en matériau composite homogène, c'est-à-dire une matrice métallique dans laquelle sont dispersées des particules céramiques agglomérées, permet d'améliorer les performances des tôles rechargées tout en étant facile à mettre en oeuvre. En effet, le procédé profite des avantages intrinsèques d'un procédé de rechargement par soudage classique, tout en améliorant les performances de la pièce rechargée et notamment sa durée de vie. La résistance à l'usure et en particulier la résistance aux chocs, à l'abrasion et/ou à l'érosion de la pièce sont améliorées par l'incorporation des particules céramiques agglomérées 4 dans la couche 2.

Ainsi, d'une manière générale, la durée de vie d'une pièce telle qu'une tôle, rechargée et comportant des particules de céramiques, est de 30% à 50 % supérieure à celle d'une tôle rechargée conventionnellement, sans addition de particules céramiques, selon la quantité de particules céramiques ajoutée.

Le graphique représenté sur la figure 2 compare, en particulier, la résistance à l'usure de trois tôles A à C :
- la tôle A est une tôle en acier de qualité S235JR, non rechargée.
- la tôle B est une tôle rechargée par soudage selon l'art antérieur utilisant un alliage métallique comprenant 5% de C et 30% de Cr,
- la tôle C est une tôle rechargée par soudage selon l'invention, avec un apport de particules céramiques.
Les tôles B et C sont identiques et elles comportent le même alliage métallique d'apport. Par contre, la tôle C comporte un revêtement comprenant des particules céramiques telles que de l'alumine (Al₂O₃ ayant une pureté de 92-96%) frittée. On constate, sur la figure 2, que la tôle C présente une résistance à l'usure de facteur 150, nettement améliorée par rapport à celle de la tôle B qui présente une résistance à l'usure de facteur 100.

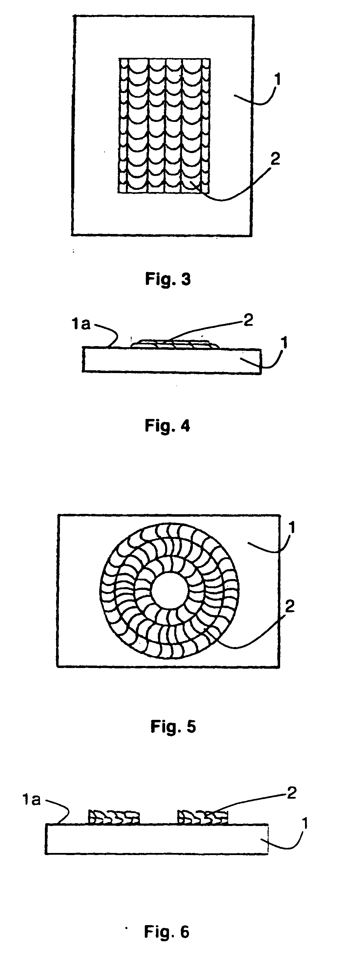

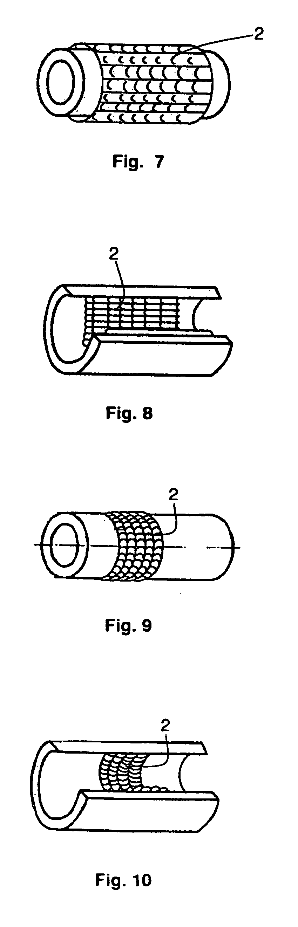

L'invention n'est pas limitée aux modes de réalisation décrits ci-dessus. En particulier, la géométrie des motifs de rechargement et des pièces à recharger peuvent être de tout type. À titre d'exemple, les figures 3 à 6 illustrent des tôles rechargées avec deux motifs distincts de rechargement. Ainsi, sur les figures 3 et 4, le revêtement 2 réalisé sur la tôle 1 est dit rectiligne tandis que, sur les figures 5 et 6, le revêtement 2 est dit circulaire. Les figures 7 à 10 illustrent des pièces rechargées de différentes géométries. Sur les figures 7 et 8, le revêtement 2 est dit axial, tandis que sur les figures 9 et 10, il est dit circonférentiel.

De plus, une pièce ou une tôle rechargée peut comporter une ou plusieurs couches en matériau composite et un traitement thermique de la surface de la pièce ou de la tôle peut, avantageusement, être réalisé avant ou après le rechargement par soudage. Ainsi, le dépôt peut être un dépôt dit « mono-passe » ou « multi-passes », réalisé avec n passes. Dans le cas d'un rechargement standard, le dépôt est alors réalisé avec n+6 passes au maximum, tandis que dans le cas d'un rechargement discontinu, communément appelé alvéolaire, le dépôt est réalisé avec n+15 passes au maximum.

Enfin, une couche tampon peut être préalablement disposée sur la surface de la pièce ou de la tôle à revêtir, de manière à assurer une transition métallurgique convenable vis-à-vis du rechargement final. Le choix du matériau constituant la couche tampon dépend à la fois des conditions de mise en oeuvre de la pièce rechargée, de la nature de la pièce avant rechargement et de la nature du rechargement réalisé.

## Revendications

1. Procédé de rechargement d'une pièce (1) comportant le revêtement d'au moins une partie d'une surface (1a) de ladite pièce (1), par au moins une couche (2) constituée par un matériau composite comprenant :
- un alliage métallique obtenu par fusion d'une extrémité (3a) d'un élément d'apport (3) comportant ledit alliage métallique
- et des particules céramiques,
procédé dans lequel
- l'alliage métallique est déposé sur la partie de la surface (1a) de la pièce (1) par une opération de soudage comprenant la mise en contact de l'extrémité de l'élément d'apport (3) avec la surface de la pièce (1) avant la fusion de ladite extrémité (3a) de l'élément d'apport (3),
- et les particules céramiques sont agglomérées et déposées sur la partie de la surface (1a) de la pièce (1), à l'aide d'un élément de distribution (5) comportant une sortie (5a) disposée à proximité de l'extrémité (3a) de l'élément d'apport (3) lorsque celle-ci est en contact avec la surface de la pièce (1), **caractérisé en ce que** la fusion de ladite extrémité de l'élément d'apport (3) est accompagnée d'une fusion superficielle du matériau constituant la pièce à revêtir de manière à former un bain de fusion composé d'un mélange comprenant le matériau constituant la pièce à revêtir en fusion et l'alliage métallique de l'élément d'apport en fusion.

2. Procédé selon la revendication 1, **caractérisé en ce que** les particules céramiques (4) sont choisies parmi l'alumine, la zircone, la silice et un mélange d'alumine et de zircone.

3. Procédé selon l'une des revendications 1 et 2, **caractérisé en ce que** le matériau composite comporte des particules d'au moins un alliage métallique supplémentaire, lesdites particules étant mélangées aux particules céramiques (4) avant que le mélange desdites particules ne soit déposé à l'aide de l'élément de distribution (5), sur la partie de la surface (1a) de la pièce (1).

4. Procédé selon la revendication 3, **caractérisé en ce que** l'alliage métallique supplémentaire est choisi parmi un alliage à base de fer et un alliage non ferreux.

5. Procédé selon l'une quelconque des revendications 1 à 4, **caractérisé en ce que** l'élément d'apport (3) peut être un fil plein, un fil fourré, un feuillard plein ou un feuillard fourré.

6. Procédé selon l'une quelconque des revendications 1 à 5, **caractérisé en ce que** l'alliage métallique contenu dans l'élément d'apport (3) est choisi parmi les alliages à base de fer et les alliages non ferreux.

7. Procédé selon l'une quelconque des revendications 1 à 6, **caractérisé en ce que** l'élément d'apport (3) et l'élément de distribution (5) sont chacun en mouvement par rapport à la pièce (1).

8. Procédé selon la revendication 7, **caractérisé en ce que** l'élément d'apport (3) est animé d'un mouvement suivant une direction de dépôt prédéterminée.

9. Procédé selon la revendication 7, **caractérisé en ce que** la pièce (1) est animée d'un mouvement suivant une direction de dépôt prédéterminée.

10. Procédé selon l'une des revendications 8 et 9, **caractérisé en ce que** les particules céramiques (4) sont déposées sur la partie de la surface (1a) de la pièce (1), en amont de l'élément d'apport (3) suivant la direction de dépôt prédéterminée et elles sont ensuite recouvertes par l'alliage métallique en fusion.

11. Procédé selon l'une quelconque des revendications 1 à 10, **caractérisé en ce que** la pièce (1) est constituée par une tôle en acier, ayant une épaisseur comprise entre 2mm et 500mm.

## Claims

1. A method for recharging a piece (1) comprising coating of at least a part of a surface (1a) of said piece (1) with at least one layer (2) formed by a composite material comprising:
- a metal alloy obtained by fusion of one end (3a) of a deposit element (3) comprising said metal alloy,
- and ceramic particles,
a method wherein
- the metal alloy is deposited on the part of the surface (1 a) of the piece (1) by a welding operation comprising bringing the end of the deposit element (3) into contact with the surface of the piece (1) before fusion of said end (3a) of the deposit element (3),
- and the ceramic particles are agglomerated and deposited on the part of the surface (1a) of the piece (1) by means of a distribution element (5) comprising an outlet (5a) arranged in proximity to the end (3a) of the deposit element (3) when the latter is in contact with the surface of the piece (1),
**characterized in that** fusion of said end of the deposit element (3) is accompanied by a superficial fusion of the material constituting the piece to be coated so as to form a fusion bath composed of a mixture comprising the material constituting the piece to be coated in fusion and the metal alloy of the deposit element in fusion.

2. The method according to claim 1, **characterized in that** the ceramic particles (4) are selected from alumina, zirconia, silica and a mixture of alumina and zirconia.

3. The method according to one of claims 1 and 2, **characterized in that** the composite material comprises particles of at least one additional metal alloy, said particles being mixed with the ceramic particles (4) before the mixture of said particles is deposited by means of the distribution element (5) on the part of the surface (1 a) of the piece (1).

4. The method according to claim 3, **characterized in that** the additional metal alloy is selected from an iron-based alloy and a non-ferrous alloy.

5. The method according to any one of claims 1 to 4, **characterized in that** the deposit element (3) can be a solid wire, a filled wire, a solid strip or a filled strip.

6. The method according to any one of claims 1 to 5, **characterized in that** the metal alloy contained in the deposit element (3) is selected from iron-based alloys and non-ferrous alloys.

7. The method according to any one of claims 1 to 6, **characterized in that** the deposit element (3) and the distribution element (5) are each in movement with respect to the piece (1).

8. The method according to claim 7, **characterized in that** the deposit element (3) is animated by a movement in a predetermined deposit direction.

9. The method according to claim 7, **characterized in that** the piece (1) is animated by a movement in a predetermined direction of deposit.

10. The method according to one of claims 8 and 9, **characterized in that** the ceramic particles (4) are deposited on the part of the surface (1a) of the piece (1), upstream from the deposit element (3) in the predetermined direction of deposit, and they are then covered by the metal alloy in fusion.

11. The method according to any one of claims 1 to 10, **characterized in that** the piece (1) is formed by a steel sheet having a thickness comprised between 2mm and 500mm.

## Patentansprüche

1. Verfahren zum Auftragsschweißen eines Werkstücks (1), umfassend das Beschichten wenigstens eines Teils einer Oberfläche (1a) des Werkstücks (1) mit wenigstens einer Schicht (2), die von einem Verbundwerkstoff gebildet ist, der umfasst:
- eine Metalllegierung, die durch Schmelzen eines Endes (3a) eines Zusatzelements (3), welches die Metalllegierung umfasst, erhalten wird, und
- Keramikteilchen,
Verfahren, bei dem
- die Metalllegierung auf dem Teil der Oberfläche (1a) des Werkstücks (1) durch einen Schweißvorgang abgeschieden wird, der das Inkontaktbringen des Endes des Zusatzelements (3) mit der Oberfläche des Werkstücks (1) vor dem Schmelzen des Endes (3a) des Zusatzelements (3) umfasst, und
- die Keramikteilchen agglomeriert werden und mit Hilfe eines Verteilungselements (5), das einen Auslass (5a) aufweist, der in der Nähe des Endes (3a) des Zusatzelements (3) angeordnet ist, wenn dieses mit der Oberfläche des Werkstücks (1) in Kontakt ist, auf dem Teil der Oberfläche (1a) des Werkstücks (1) abgeschieden werden,
**dadurch gekennzeichnet, dass** das Schmelzen des Endes des Zusatzelements (3) von einem oberflächlichen Schmelzen des das zu beschichtende Werkstück bildenden Werkstoffs begleitet ist, um ein Schmelzbad bestehend aus einer Mischung, die den das zu beschichtende Werkstück bildenden geschmolzenen Werkstoff und die geschmolzene Metalllegierung des Zusatzelements umfasst, zu bilden.

2. Verfahren nach Anspruch 1, **dadurch gekennzeichnet, dass** die Keramikteilchen (4) aus Aluminiumoxid, Zirkonoxid, Siliziumdioxid und einer Mischung aus Aluminiumoxid und Zirkonoxid ausgewählt sind.

3. Verfahren nach einem der Ansprüche 1 und 2, **dadurch gekennzeichnet, dass** der Verbundwerkstoff Teilchen aus wenigstens einer zusätzlichen Metalllegierung umfasst, wobei die Teilchen mit den Keramikteilchen (4) gemischt werden, bevor die Mischung der Teilchen mit Hilfe des Verteilungselements (5) auf dem Teil der Oberfläche (1a) des Werkstücks (1) abgeschieden wird.

4. Verfahren nach Anspruch 3, **dadurch gekennzeichnet, dass** die zusätzliche Metalllegierung aus einer eisenbasierten Legierung und einer Nichteisenlegierung ausgewählt ist.

5. Verfahren nach einem der Ansprüche 1 bis 4, **dadurch gekennzeichnet, dass** das Zusatzelement (3) ein massiver Draht, ein Fülldraht, ein massives Band oder ein Füllband sein kann.

6. Verfahren nach einem der Ansprüche 1 bis 5, **dadurch gekennzeichnet, dass** die in dem Zusatzelement (3) enthaltene Metalllegierung aus den eisenbasierten Legierungen und den Nichteisenlegierungen ausgewählt ist.

7. Verfahren nach einem der Ansprüche 1 bis 6, **dadurch gekennzeichnet, dass** das Zusatzelement (3) und das Verteilungselement (5) jeweils gegenüber dem Werkstück (1) in Bewegung sind.

8. Verfahren nach Anspruch 7, **dadurch gekennzeichnet, dass** das Zusatzelement (3) entlang einer vorbestimmten Abscheiderichtung bewegt wird.

9. Verfahren nach Anspruch 7, **dadurch gekennzeichnet, dass** das Werkstück (1) entlang einer vorbestimmten Abscheiderichtung bewegt wird.

10. Verfahren nach einem der Ansprüche 8 und 9, **dadurch gekennzeichnet, dass** die Keramikteilchen (4) auf dem Teil der Oberfläche (1a) des Werkstücks (1) vor dem Zusatzelement (3) entlang der vorbestimmten Abscheiderichtung abgeschieden werden und sie anschließend mit der geschmolzenen Metalllegierung überzogen werden.

11. Verfahren nach einem der Ansprüche 1 bis 10, **dadurch gekennzeichnet, dass** das Werkstück (1) von einem Stahlblech mit einer Dicke zwischen 2 mm und 500 mm gebildet ist.
